# EUROPÄISCHE PATENTSCHRIFT

(11) **EP 2 312 333 B1**
(45) Veröffentlichungstag und Bekanntmachung des Hinweises auf die Patenterteilung: **12.11.2014**
(21) Anmeldenummer: 10179841.1
(22) Anmeldetag: 27.09.2010
(51) Int. Cl.: G01S 15/10, G01S 15/93, G01S 15/87

(54) **Verfahren und Vorrichtungen zur Ortsbestimmung eines Objekts durch Reflektionserfassung von Wellenpulsen**
Method and device for locating an object by detecting the reflection of pulsed waves
Procédé et dispositifs pour déterminer la position d'un objet par détection de la réflexion d'impulsions d'ondulations

(30) Priorität: 07.10.2009 DE 102009045429
(43) Veröffentlichungstag der Anmeldung: 20.04.2011
(73) Patentinhaber: Robert Bosch GmbH, 70442 Stuttgart (DE)
(72) Erfinder: Karl, Matthias, 76275 Ettlingen (DE)

(56) Entgegenhaltungen:
- DE-A1- 3 701 521
- DE-A1- 10 225 614
- DE-A1- 19 901 847

## Beschreibung

### Gebiet der Erfindung

Die Erfindung bezieht sich auf die Ortsbestimmung eines Objekts gegenüber einem Fahrzeug, um Hindernisse zu erkennen. Hierbei werden Wellen in die Umgebung abgesendet, wobei von einem Objekt reflektierte Wellen zur Erfassung des Objekts verwendet werden. Die Erfindung wird insbesondere eingesetzt für Fahrerassistenzsysteme im Kraftfahrzeugbereich, wobei die der Erfindung zugrunde liegende Vorgehensweise beispielsweise aus dem Radarbereich bekannt ist.

### Stand der Technik

Zur Erkennung von Objekten im KFZ-Bereich werden Sende-/Empfangseinrichtungen verwendet, die Ultraschall- oder elektromagnetische Wellen aussenden, um anhand der Stärke der Reflexion durch ein Objekt den Ort des Objekts relativ zum Sendeort festzustellen. Zum einen wird bei derartigen Verfahren der Ort des Objekts ermittelt, sowie dessen Entfernung.

Es ist ferner bekannt, die Entfernung mittels Laufzeiten zu erfassen, und den Ort durch eine Verteilung einer Vielzahl von Sensoren entlang des Fahrzeugs zu erfassen. Hierbei wird beispielsweise davon ausgegangen, dass der Sensor mit der größten empfangenden Signalstärke dem Objekt am nächsten liegt.

Zur Richtungserfassung werden ferner bekanntermaßen Sende-/Empfangselemente in sogenannten Phased-Array-Anordnungen vorgesehen, wobei durch einen gezielten Phasenversatz zwischen den einzelnen Elementen bestimmte Richtcharakteristika erreicht werden können, insbesondere besondere Empfindlichkeiten in eine Richtung.

Eine Einparkhilfe ähnlicher Art ist in US 7,027,356 B2 beschrieben, in der eine Vielzahl von Ultraschallwandlern in einer Reihe angeordnet sind. Um nach der Reflexion am Objekt herauszufinden, von welchem Wandler das abgesendete Signal stammt, werden von den einzelnen Wandlern verschiedene Impulszüge ausgesandt, die einen spezifischen Kennzeichner ("identifier") enthalten. Dieser Kennzeichner wird für aufeinander folgende Abtastoperationen geändert oder durchgewechselt, um zu vermeiden, dass zwei verschiedene Fahrzeuge mit dem gleichen System einander stören. Die dargestellte Ausführung betrifft das Unterscheiden von gesendeten Impulszügen mittels Kennzeichnungsmerkmalen, die über die Zeit variieren, um gegenseitige Differenzen ausschließen zu können.

Aus der US 2004/218471 A1 ist ein ferner ein Verfahren zur Erfassung von Objekten als Einparkhilfe bekannt, bei dem eine Anzahl von Abstands-Sensoren vorgesehen ist. Die Sensoren werden durch einen Microcontroller mit einer zeitlich veränderlichen Kennung beaufschlagt. Es wird auch die Möglichkeit beschrieben, die Sensoren mit unterschiedlichen Trägerfrequenzen zu betreiben.

Zum einen ist das Einbringen von sich zeitlich ändernden Kennzeichnern in dem Impulszug komplex und zum anderen wird dadurch lediglich ein Übersprechen oder Interferenzen durch weitere Fahrzeuge vermieden, wobei jedoch ein sich zeitlich ändernder Kennzeichner keine verbesserte Richtungserkennung oder Empfindlichkeit vorsieht. Zum anderen werden die einzelnen Sensoren explizit getrennt voneinander genutzt, wobei der Kennzeichner zur Trennung der einzelnen Signale vorgesehen wird.

Es wurde erfindungsgemäß als Problem erkannt, dass durch das Trennen der Signale der einzelnen Sensoren die Übertragungsenergie durch die Leistung eines einzelnen Wandlers beschränkt ist. Dadurch ergibt sich eine geringere Reichweite und eine geringere Empfindlichkeit, die ebenso mit einer geringeren Präzision hinsichtlich der erfassten Entfernung oder Richtung verknüpft ist.

### Offenbarung der Erfindung

Dieses Problem wird gelöst durch das erfindungsgemäße Verfahren und die erfindungsgemäße Vorrichtung gemäß den unabhängigen Ansprüchen.

Das der Erfindung zugrunde liegende Konzept ist es, die Sendeenergie der abgegebenen Sendepulse jedes Senders zu bündeln, ohne eine üblicherweise daraus resultierende deutliche Verschlechterung der Richtungsempfindlichkeit in Kauf nehmen zu müssen, indem die einzelnen Impulse logisch trennbar vorgesehen werden. Die Richtungsempfindlichkeit wird gegenüber dem Stand der Technik nicht nur beibehalten, sondern auch erhöht, indem die Signale der einzelnen Sender lediglich logisch durch ihre Impulslänge getrennt werden, wobei es diese logische Unterscheidung dennoch ermöglicht, physikalisch kombinierte oder überlagerte Signale zu verwenden, deren Gesamtenergie zur Richtungs- und Entfernungserfassung verwendet werden kann. Dadurch ergibt sich ein deutlich höheres Signal-zu-Rausch-Verhältnis, ohne jedoch die Richtungsempfindlichkeit einbüßen zu müssen, welche sich ergeben würde, wenn eine Vielzahl von Sensoren mit dem gleichen Signal während des Sendens betrieben wird.

Während derselben Ortsbestimmungsperiode, d.h. während derselben Echoberuhigungszeit (d.h. während eines einzelnen Abtastvorgangs) senden mindestens zwei Sender einen Sende-Wellenpuls, wobei erfindungsgemäß die Sende-Wellenpulse verschiedener Sensoren während des gleichen Abtastvorgangs bzw. während der gleichen Ortsbestimmungsperiode unterschiedliche Pulslängen aufweisen. Würden während der gleichen Ortsbestimmungsperiode die gleichen Sendeimpulse von den verschiedenen Sendern abgegeben werden, d.h. mit der gleichen Pulslänge, dann wäre es nicht möglich, die einzelnen reflektierten Komponenten den einzelnen Sensoren zuzuordnen und somit den Reflexionsort zu bestimmen.

Die Erfindung ermöglicht jedoch beispielsweise allein aufgrund der Betrachtung der Flanken der jeweiligen reflektierten Komponenten, die im Empfangs-Wellenpuls auftreten, die Zuordnung der einzelnen Komponenten zu den verschiedenen gesendeten Sensoren und somit durch die Betrachtung der Laufzeit eine präzise Interpretation der Richtung und der Entfernung. Diese Trennung ist unabhängig davon möglich, ob sich die einzelnen Komponenten, welche den einzelnen Sensoren zugeordnet sind, überlappen oder nicht, da beispielsweise alleine schon anhand der Pulsform (d.h. Betrachtung der Zeitpunkte der jeweiligen Flanken) eine Zuordnung zu den Sensoren vorgesehen werden kann. Da nun eine Vielzahl von Flanken eine Richtungsinformation tragen (da sie verschiedenen Sensoren zugeordnet sind), ergibt sich auch bei einem verrauschten Empfang ein hohes Signal-Rausch-Verhältnis und eine hohe Präzision der Richtungs- und Entfernungsmessung.

Eine besonders bevorzugte Ausführung betrifft das Überlagern der Sende-Wellenpulse der verschiedenen Sender, wobei sich hierdurch insbesondere die gesamte abgestrahlte Spitzenleistung erhöht. Dadurch lässt sich die Präzision bzw. die Reichweite weiter erhöhen, und die Empfindlichkeit gegenüber Rauschen weiter verringern. Obwohl sich die einzelnen Sendeimpulse zeitlich überlagern, äquivalent zu einer Überlagerung im physikalischen Kanal, und somit einen einzelnen Impulsberg hervorrufen, können die einzelnen Komponenten trotz der physikalischen Vermengung logisch in sehr einfacher Weise getrennt werden, indem die im Empfangs-Wellenpuls auftretenden Flanken (die aus überlagerten Sende-Wellenpulsen resultieren) betrachtet werden. Hierbei ergibt sich schon bei der Betrachtung der einzelnen Flankenzeitpunkte alleine eine sehr gute räumliche Auflösung durch eine präzise Zuordnung der einzelnen Komponenten innerhalb des Empfangs-Wellenpulses zu den zugehörigen Sende-Wellenpulsen der einzelnen Sender-/Empfangselemente.

Durch die logische Trennung mittels unterschiedlicher Pulslänge während der gleichen Ortsbestimmungsperiode kann nicht nur jedes einzelne Sende-/Empfangselement ohne Störung durch die anderen Empfangselemente Entfernungsinformation erfassen, sondern es ergeben sich zudem durch die Verknüpfung der einzelnen abgegebenen Sendeimpulse zusätzliche präzise Angaben. Insbesondere lässt sich der einzelne Empfangs-Wellenpuls (der das Resultat einer Vielzahl von Sende-Wellenpulsen ist) durch einen einzigen Vergleichsprozess auswerten, im Gegensatz zu einer Vielzahl von getrennten Vergleichsprozessen der einzelnen Empfänger, die zudem eine nachgeschaltete Verknüpfung der einzelnen Ergebnisse erfordert. Die physikalische Erfassung findet erfindungsgemäß dadurch statt, dass die Empfangswellenform bzw. deren Einhüllende untersucht wird. Dies wird insbesondere dadurch ausgeführt, dass die einzelnen Flanken detektiert werden, welche von den einzelnen Sende-Wellenpulsen stammen. Hierbei können die einzelnen Flanken in einfacher Weise dem einzelnen Sende-Wellenpuls zugeordnet werden und somit dem zugehörigen Sendelement, und der zeitliche Versatz zwischen den verschiedenen Flankengruppen bzw. Flankenpaaren gibt Aufschluss über Richtung und Entfernung des Objekts.

Neben zeitlichen Vergleichen können auch die Höhen der Flanken miteinander verglichen werden, um so jeder Flanke, d.h. jeder Amplitude der einzelnen Komponente, im Bezug zu den anderen Flankenhöhen bzw. Amplituden der anderen Komponenten auf die Dämpfung zu schließen, die wiederum unmittelbar mit der Weglänge verknüpft ist. Dadurch lässt sich der Reflexionsort durch die Betrachtung der Verhältnisse der einzelnen Signalstärken derselben Ortsbestimmungsperiode berücksichtigen.

Grundsätzlich können alle Betrachtungsaspekte (d.h. zeitlicher Versatz zwischen den Flanken, Flankenlänge und Flankenhöhe (= Signalstärke)) zur Ortsbestimmung verwendet werden, wobei auch eine beliebige Kombination dieser Aspekte die Erfindung realisiert. Das erfindungsgemäße Konzept fußt ferner darauf, dass eine oder mehrere physikalische Größen (d.h. Flankenzeitpunkt, Flankenlänge und Flankenhöhe) in ihrem Verhältnis zueinander betrachtet werden, wobei die einzelnen Komponenten des Empfangs-Wellenpulses durch ihre relative Beziehung zueinander miteinander verschränkt sind, wodurch sich ein aussagekräftiges, komplexes Auswertungssignal ergibt. Die Erfindung geht somit nicht nur über die bloße Addition einzelner Impulse bzw. der einzelnen daraus resultierenden Informationen hinaus, sondern erlaubt auch, einzelne Impulse miteinander in Beziehung zu setzen, wodurch sich deutlich mehr Information über das reflektierende Objekt ergibt.

Grundsätzlich kann der Empfangs-Wellenpuls einer, mehrerer oder aller Sende-/Empfangseinrichtungen betrachtet werden. Hierbei werden Komponenten des Empfangs-Wellenpulses verschiedener Sende-/Empfangselemente verglichen, wobei die Komponenten innerhalb desselben Empfangs-Wellenpulses oder verschiedener Empfangs-Wellenpulse untereinander verglichen werden.

Das erfindungsgemäße Verfahren zur Bestimmung des Orts eines Objekts gegenüber einem Fahrzeug umfasst daher das Vorsehen einer Sende-/Empfangseinrichtung mit einer Mehrzahl von Sende-/Empfangselementen. Diese Elemente sind an einem Fahrzeug angeordnet, beispielsweise in einer Matrix oder entlang einer Linie, beispielsweise als Array. Insbesondere eine regelmäßige Anordnung kann vorgesehen sein. Erstreckt sich die Anordnung der Sende-/Empfangselemente entlang einer Linie, so kann ein vor dieser Linie vorgesehenes Objekt räumlich gut aufgelöst werden. Vorzugsweise sind die einzelnen Elemente derart angeordnet, dass ein außerhalb des Fahrzeugs vorgesehenes Objekt die einzelnen Elemente in deutlich unterschiedlichen Winkeln sieht. Da der Winkelunterschied und auch der daraus resultierende Entfernungsunterschied unmittelbar in die Form der Empfangs-Wellenimpulse eingeht, lässt sich ein derart angeordnetes Objekt präzise erfassen. Das erfindungsgemäße Verfahren umfasst ferner das Senden von Sende-Wellenpulsen einer Trägerwelle mittels der Sende-/Empfangseinrichtung während derselben Ortsbestimmungsperiode. Die Trägerwelle wird von den Sendeelementen vorgesehen und kann grundsätzlich eine elektromagnetische Welle oder eine akustische Druckwelle sein. Die Wellenlänge des Trägersignals ist vorzugsweise ≤ 10 cm, ≤ 5 cm, oder besonders bevorzugt ≤ 1 cm, insbesondere ca. 7 mm. Dadurch wird eine geeignete Auflösung der Umgebung erreicht. Im Falle von Schall als Trägerwelle werden vorzugsweise Ultraschallwellen mit einer Trägerwellenlänge zwischen 0,1 cm und 1 cm verwendet, wobei die Sende-/Empfangselemente in diesem Fall entsprechende Schallwandler sind. Spezielle Ausführungsformen sehen eine Schallwelle mit einer Trägerwellenlänge vor, die bei Ultraschall in Luft unter Normalbedingungen bei einer Frequenz von ca. 33 kHz oder bevorzugt ca. 48 kHz auftreten. Es ist ferner grundsätzlich auch möglich, elektromagnetische Wellen als Trägerwelle zu verwenden, wobei diese die gleichen Wellenlängen aufweisen können, wie sie oben für Schallwellen in Luft unter Normalbedingungen angegeben sind. In diesem Falle sind die Sende-/Empfangselemente Antennenelemente, die in einem Array oder in einer Matrix angeordnet sind. Die Sende-Wellenpulse werden während derselben Ortsbestimmungsperiode gesendet, wobei alle Sende-Wellenpulse derselben Ortsbestimmungsperiode derselben Bestimmung des Orts eines Objekts zugeordnet sind. Mit anderen Worten sieht die Erfindung vor, einen einmaligen oder vorzugsweise sich wiederholenden Prozess der Ortsbestimmung durchzuführen, wobei ein einzelner Prozess der Ortsbestimmung derselben Ortsbestimmungsperiode zugeordnet ist und alle in dieser Periode gesendeten Sende-Wellenpulse gemeinsam die Dauer der Ortsbestimmungsperiode für diesen einzelnen Prozess vorsehen.

Weitere Ausführungsformen sehen die Verwendung von Licht vor, vorzugsweise im sichtbaren Bereich oder im IR- oder UV-Bereich. Hierzu kann beispielsweise ein Tagfahrlichtsystem oder ein vergleichbares System verwendet werden, beispielsweise mit LEDs als Lichtquelle. Die Lichtquelle erhält ein erfindungsgemäß moduliertes Signal, beispielsweise mit Modulations-Signalanteilen von 100 MHz bis 10 GHz. Dadurch lassen sich Wellenlängen der Einhüllenden von 3 m bzw. 3 cm erreichen, die erfindungsgemäß zur Abtastung verwendet werden können. Mindestens ein gerichteter Lichtdetektor bzw. Imager wird mit z.B. 100 MHz bzgl. seiner Empfindlichkeit moduliert, um eine "Verschiusszeit" von ca. 1/25 s pro Blickwinkel bzw. Ausrichtung des Lichtdetektors zu realisieren. Hierbei werden vorzugsweise 8 bis 16 unterschiedliche Blickrichtungen realisiert.

Erfindungsgemäß wird für diesen bzw. für jeden einzelnen Ortsbestimmungsprozess mindestens ein Empfangs-Wellenpuls empfangen (d.h. ein Empfangs-Wellenpuls von einem, mehreren oder allen Sende-/Empfangselementen), der den von mindestens einem Objekt reflektierten Sende-Wellenpulsen entspricht, die von dem Objekt reflektiert werden. Der Empfangs-Wellenpuls entspricht somit der Überlagerung aller Sende-Wellenpulse (soweit diese signifikant empfangen werden können), die während derselben Ortsbestimmungsperiode bzw. während desselben Ortsbestimmungsprozesses gesendet wurden. Hierbei ist zu berücksichtigen, dass durch den Übertragungs- und Reflexionsprozess sich die Wellenpulse nicht nur überlagern sondern auch verzerrt werden durch Dopplereffekte, falls vorhanden und insbesondere durch Phasenänderungen und Änderungen im Frequenzverlauf durch die Übertragungscharakteristik des Übertragungskanals. Die Reflexion am Objekt wird vorgesehen durch eine leitende Fläche (beispielsweise Metall) im Falle von elektromagnetischen Wellen, oder durch spiegelnde Flächen im Falle von Lichtquellen, und wird bei der Verwendung von Ultraschallwellen vorgesehen durch Objekte, welche ein akustisches Medium darstellen, das sich von Luft unter Normalbedingungen unterscheidet, beispielsweise Feststoffe.

Die erfindungsgemäße, für mindestens zwei Sendeelemente der Sende-/Empfangselemente verschiedenen Sende-Wellenpulse werden während derselben Ortsbestimmungsperiode gesendet, so dass anhand des darauf folgend empfangenen Empfangs-Wellenpulses die zugehörigen Komponenten unterschieden und den einzelnen Empfangselementen und deren Stelle am Fahrzeug zugeordnet werden können. Die Unterscheidung der Pulslänge der Sende-Wellenpulse für die verschiedenen Sendeelemente ermöglicht eine räumliche Kodierung, wobei die unterschiedlichen Orte der Sendeelemente kodiert werden über die verschiedenen Pulslängen. Da auch bei starken Störungen die Pulslänge mit ausreichender Präzision extrahiert werden kann, ermöglicht es die Erfindung, dass aus dem empfangenen Empfangs-Wellenpuls die einzelnen, überlagerten Komponenten der reflektierten Sende-Wellenpulse voneinander getrennt und den einzelnen Sendeelementen zugeordnet werden können. Hierbei ist zu beachten, dass die einzelnen Sende-Wellenpulse sich nicht notwendigerweise überlappen, und trotzdem zu überlagerten Komponenten eines Empfangs-Wellenpulses führen können, wobei auch die einzelnen Komponenten des Empfangs-Wellenpulses sich nicht notwendigerweise überlagern müssen, sondern lediglich zeitlich derart nahe beieinander liegen, dass gewährleistet ist, dass sich die Position des Objekts relativ zum Fahrzeug (oder umgekehrt) für die einzelnen Komponenten des Empfangs-Wellenpulses im Wesentlichen die gleiche ist.

Der Ort wird gemäß dem erfindungsgemäßen Verfahren erfasst als Relativposition zwischen der Sende-/Empfangseinrichtung und dem Objekt. Der Ort wird daher relativ bestimmt durch Vergleichen von Komponenten des Empfangs-Wellenpulses, die derselben Ortsbestimmungsperiode zugeordnet sind, und die von verschiedenen Sende-/Empfangselementen stammen. Dieser Vergleich erfordert nicht notwendigerweise das Extrahieren der einzelnen Komponenten des Empfangs-Wellenpulses, sondern kann auch durchgeführt werden durch Betrachtung der Gesamt-Wellenform des Empfangs-Wellenpulses. Da die Gesamtheit aller Komponenten des Empfangs-Wellenpulses den Ort wiedergibt, können diese entweder zunächst voneinander getrennt werden, um verglichen zu werden, oder es kann der Empfangs-Wellenpuls als Gesamtheit betrachtet werden, da dieser die gleiche Information trägt. Die Gesamtflankenform des Empfangs-Wellenpulses kann auch ohne Zergliederung in einzelne Sende-Komponenten zur Ortsbestimmung verwendet werden. Beispielsweise kann eine Vielzahl von Sendeelementen, die in einer Reihe von links nach rechts angeordnet sind, nacheinander von links nach rechts eine zeitlich versetzte Aufwärtsflanke aufweisen. Der Ort des Objekts kann dann beispielsweise als die "Steilheit" des gesamten Empfangs-Wellenpulses erfasst werden: ein in der Höhe des ersten Elements vorgesehenes Objekt erzeugt eine sehr geringe Steilheit, da Elemente mit zunehmender Verzögerung der Aufwärtsflanke noch zusätzlich mit einer zunehmenden Weglänge beaufschlagt sind. In gleicher Weise erzeugt ein Objekt in der Höhe des letzten Elements, d.h. des Elements, welches als Letztes eine Aufwärtsflanke abgibt, eine hohe Steilheit, da die geringe Verzögerung des ersten, am weitesten links gelegenen Elements durch eine lange Laufzeit bzw. lange Wegstrecke kompensiert wird und die große Verzögerung des letzten Elements "vorgezogen" wird, da die Strecke aufgrund der Nähe zum Objekt gering ist. Dadurch werden die Aufwärtsflanken durch die zueinander versetzte Reflexion zusammengezogen (woraus eine hohe Steilheit resultiert), oder auseinander gezogen (woraus sich eine geringere Steilheit ergibt).

Dieses einfache Beispiel zeigt, dass die Gesamtwellenform bzw. der Flankenverlauf innerhalb des Empfangs-Wellenpulses auch zur Ortsbestimmung verwendet werden kann, wobei auch komplexere Wellenformen (Matching) Algorithmen verwendet werden können oder andere Betrachtungsweisen, die die verschiedenen Komponenten nicht voneinander zergliedern.

Alternativ kann der Zeitpunkt des Auftretens einer Flanke der einzelnen Komponenten betrachtet werden, wobei sich hieraus eine Weglänge ergibt und durch Triangulation der Ort bestimmt werden kann. Es erfordert jedoch die erfindungsgemäße Zuordnung der einzelnen Komponente des Empfangs-Wellenpulses zu dem zugehörigen Sende-/Empfangselement, die durch die unterschiedliche Pulslänge gewährleistet wird. Alternativ oder in Kombination hierzu kann ein Amplitudenvergleich der Signalstärke der einzelnen Komponenten vorgenommen werden. Ferner kann durch die Signalstärke der reflektierten Komponente die Entfernung geschätzt werden, um eine weitere Information für die Entfernung zu erlangen, die mit der Information kombiniert werden kann, die sich aus der Laufzeiterfassung ergibt. Grundsätzlich ergeben sich Informationen über den Ort, durch relativen Vergleich der Komponenten des Empfangs-Wellenpulses, durch Laufzeitmessung, die auf dem Vergleich des Zeitpunkts der Absendung mit dem Zeitpunkt des Empfangs basiert, oder eine Kombination hiervon.

Erfindungsgemäß unterscheiden sich die Sende-Wellenpulse aller Sende-/Empfangselemente, wobei sich die Sende-Wellenpulse auf dieselbe Ortsbestimmungsperiode beziehen, wobei die Unterscheidung in der Pulslänge liegt. Alternativ oder in Kombination hierzu kann pro Ortsbestimmungsperiode jedes Sende-/Empfangselement nur einen Sende-Wellenpuls aussenden. Alternativ kann pro Ortsbestimmungsperiode eine Mehrzahl von Sende-Wellenpulsen ausgesendet werden, wenn gewährleistet ist, dass das Echo eines ersten Sende-Wellenpulses abgeklungen ist, wenn ein zweiter Sende-Wellenpuls gesendet wird. Im Wesentlichen kann sich daher die Ortsbestimmungsperiode auch auf die Zeit beziehen, in der das Echo, welches sich durch Reflexion ergibt, abgeklungen ist. Insbesondere können Ortsbestimmungsperioden der Echoberuhigungszeit entsprechen.

Gemäß einer weiteren Ausführung der Erfindung überlappen sich Sende-Wellenpulse während derselben Ortsbestimmungsperiode zumindest teilweise, oder werden derart zueinander versetzt abgesandt, dass alle oder die meisten Komponenten des Empfangs-Wellenpulses übereinander liegen. Das Verfahren kann auch gezielt einen uniformen Empfangs-Wellenpuls erzeugen, der nur aus Komponenten besteht, die sich zumindest zeitweise überlappen, indem die Verzögerung zwischen verschiedenen Sende-Wellenpulsen sich nach einer vorhergehenden erfindungsgemäßen Ortsbestimmungsperiode richtet und so gezielt der Versatz der verschiedenen Sende-Wellenpulse sich nach einem Empfangs-Wellenpuls einer vorhergehenden Ortsbestimmungsperiode richtet, die als Ortsschätzung für die Ortsbestimmungsperiode dient. Wenn erfindungsgemäß sich Sende-Wellenpulse in dem Empfangs-Wellenpuls überlagern, ergibt sich eine insgesamt höhere Sendeleistung, wobei sich die einzelnen Leistungen der Sendelemente addieren. Dadurch wird eine höhere Reichweite erzielt, so dass auch weit entfernt liegende Objekte bei geringem Signal/Rausch-Verhältnis noch mit gewisser Präzision erfasst werden können.

Eine weitere Ausführung der Erfindung sieht vor, dass Ultraschallwellen oder Radarwellen als Trägerwelle versendet werden. Die Sende-Wellenpulse weisen eine Einhüllende auf, die eine im Wesentlichen senkrechte Startflanke, eine im Wesentlichen senkrechte Endflanke oder beides aufweist. Zwischen Start- und Endflanke kann ins-besondere eine konstante Signalstärke der Trägerwelle herrschen, so dass sich als Einhüllende eine Rechteckform ergibt. Diese einfachen Wellenformen haben den Vorteil, dass sie einfach ausgewertet werden können. Insbesondere im Wesentlichen senkrechte Flanken können auch in stark verrauschten empfangenen Signalen gut erkannt werden, wobei erfindungsgemäß der Zeitpunkt der Start- und oder Endflanke wesentlich zur Ortsbestimmung beiträgt.

Gemäß einer weiteren Ausführungsform der Erfindung werden die einzelnen Sende-Wellenpulse von einzelnen Sende-/Empfangselementen der Sende-/Empfangseinrichtung versandt, die räumlich voneinander getrennt sind. Bei Anwendungen im KFZ-Bereich ist es insbesondere vorteilhaft, dass sich die einzelnen Sende-/Empfangselemente entlang einer Reihe (oder entlang mehrerer zueinander ausgerichteter und paralleler Geraden) befinden. Die einzelnen Elemente sind vorzugsweise periodisch oder zumindest regelmäßig zueinander angeordnet. Die Sende-/Empfangselemente haben vorzugsweise einen Minimalabstand zueinander (oder einen konstanten Abstand zueinander), der dem Vielfachen der Wellenlänge der Trägerwelle entspricht. Das Vielfache kann mindestens 6, 8, 12, 15 oder 20 betragen. Die Wellenlänge bemisst sich bei Ultraschallwellen nach der Wellenlänge in Luft bei Normalbedingungen und bei elektromagnetischen Wellen gemäß der Wellenlänge in Luft bzw. in Vakuum. Durch den Größenabstand der einzelnen Elemente werden die Differenzen verringert und insbesondere Übersprechen unterdrückt bzw. unerwünschte Kopplungen vermieden.

Erfindungsgemäß kann der Ort durch eine einzelne Ortsbestimmungsperiode oder vorzugsweise durch mehrere Ortsbestimmungsperioden vorgesehen werden. Während jeder Ortsbestimmungsperiode sendet jedes Sendelement genau einen Sende-Wellenpuls, oder eine Vielzahl, wobei bei der Absendung einer Vielzahl von Sende-Wellenpulsen durch dasselbe Sendeelement während derselben Ortsbestimmungsperiode gewährleistet sein muss, dass zwischen zwei aufeinander folgenden Sende-Wellenpulsen eine Mindestwartedauer eingehalten wird. Diese Mindestwartedauer kann sich nach der Echoberuhigungszeit richten, oder kann ein Schutzintervall vorsehen, um eine Störung der Sendelemente untereinander zu vermeiden. Gemäß einer spezifischen Ausführung der Erfindung umfasst dieses das wiederholte Senden von Sende-Wellenpulsen für eine Vielzahl von (aufeinander folgenden) Ortsbestimmungsperioden, wobei jedes Sende-/Empfangselement zugehörige Sende-Wellenpulse mit einer Pulslänge ausstrahlt, die für jede Ortsbestimmungsperiode gleich ist. Somit ist konstant eine Pulslänge einem bestimmten Sende-/Empfangselement zugeordnet und umgekehrt. Ferner können die jeweiligen Sende-/Empfangselemente Sende-Wellenpulse mit Pulslängen senden, die für verschiedene Ortsbestimmungsperioden unterschiedlich sind. Damit kann zwar für jede einzelne Ortsbestimmungsperiode die Pulslänge dem zugehörigen Sende-/Empfangselement zugeordnet werden, jedoch ergibt sich keine konstante Zuordnung. Diese nicht konstante Zuordnung kann verwendet werden, um beispielsweise Pulslängen von Sende-Wellenpulsen an vorhergehende Ortsschätzungen oder Ortsbestimmungen anzupassen oder um die Gesamtsendeleistung gleichmäßig auf die verschiedenen Sende-/Empfangselemente zu verteilen.

Gemäß einem weiteren erfindungsgemäßen Verfahren wird der Ort erfasst durch Vergleich eines Empfangs-Wellenpulses oder mehrerer Empfangs-Wellenpulse mit einer Mehrzahl von Schwellwerten unterschiedlicher Höhe. Da Sende-Wellenpulse mit einer bestimmten Einhüllenden vorgesehen sind, beispielsweise einer Einhüllenden in Rechteckform und/oder mit im Wesentlichen senkrechter Start- und/oder Endflanke von Schwellwerten, kann der Gesamtempfangs-Wellenpuls in einzelne Komponenten aufgeteilt werden. Dies ermöglicht eine explizite Zuordnung der einzelnen Komponenten zu den zugehörigen Sende-Wellenpulsen. Diese Schwellwerte sind in unterschiedlicher Höhe vorgesehen, wobei die Schwellwerte zwischen Signalstärken verschiedener oder überlagerter Komponenten derselben Ortsbestimmungsperiode liegen. Hierbei werden die Schwellwerte der Signalstärke der einzelnen Komponenten des Empfangs-Wellenpulses angepasst, um vorzugsweise in der Mitte zwischen zwei verschiedenen Signalstärke-Empfangsstufen zu liegen. Die einzelnen Signalstärke-Empfangsstufen ergeben sich durch sich überlagernde Komponenten im Empfangs-Wellenpuls, die wiederum durch ihre Pulslänge einzelnen Sendelementen zugeordnet werden können. Selbst wenn die Sende-Wellenpulse derselben Ortsbestimmungsperiode die gleiche Signalstärke aufweisen, ergeben sich unterschiedliche Signalstärken in den reflektierten Komponenten des Empfangs-Wellenpulses alleine durch die unterschiedliche Ausbreitung durch den Raum, so dass vorteilhafterweise die Schwellwerte den Signalstärken der einzelnen empfangenen Komponenten angepasst werden. Bei einem vereinfachten Verfahren werden jedoch die Schwellwerte vordefiniert vorgesehen. Bevorzugt werden die Schwellwerte jedoch an die Signalstärke des Empfangs-Wellenpulses einer vorangehenden oder einer aktuellen Ortsbestimmungsperiode angepasst, vorzugsweise an die Signalstärke der einzelnen Komponenten des Empfangs-Wellenpulses, oder auch (vereinfacht) an die Signalstärke der einzelnen Sende-Wellenpulse. Falls das erfindungsgemäße Verfahren umfasst, die Schwellwerte nicht unabhängig von den empfangenen Wellenpulsen vorzusehen, dann wird die Signalstärke ermittelt durch Erfassen von Flanken in den Empfangs-Wellenpulsen und durch Erfassung der jeweiligen Höhe dieser Flanke, wobei die Erfassung der Höhe vorzugsweise nicht von eventuell beaufschlagten Grundkomponenten (Bias bzw. DC-Komponenten) beeinflusst wird.

Vorzugsweise umfasst das Vergleichen der zeitlichen Relation der Komponenten des Empfangs-Wellenpulses, beispielsweise durch Vergleichen der Zeitpunkte, an denen Flanken in dem Empfangs-Wellenpuls auftreten, oder durch Vergleichen von Signalstärken der Komponenten, oder durch eine Kombination hiervon. Das Verfahren kann ferner umfassen: Zuordnen der Komponenten des Empfangs-Wellenpulses zu denjenigen Sende-/Empfangselementen, von denen der jeweilige Sendepuls gesendet wurde. Hierbei bildet der jeweilige Sende-Wellenpuls die zugehörige Komponente, indem der Sende-Wellenpuls am Objekt reflektiert wird. Die erfindungsgemäße Zuordnung findet statt durch Erfassen der Pulslänge, da die einzelnen Sende-/Empfangselemente gemäß einer individuellen Pulslänge voneinander unterschieden werden können, und die später empfangenen einzelnen Komponenten innerhalb des Empfangs-Wellenpulses den zugehörigen Sendeelementen alleine durch Erfassung der Pulslänge zugeordnet werden können. Die Sende-/Empfangselemente wiederum weisen einen spezifischen Ort auf, so dass aufgrund der Zuordnung für jede einzelne empfangene Komponente, deren Pulslänge erfasst werden kann, der Absendeort eindeutig ermittelt werden kann.

Die Erfindung wird ferner vorgesehen durch eine Vorrichtung gemäß dem unabhängigen Vorrichtungsanspruch. Insbesondere umfasst diese Vorrichtung eine Sende-/Empfangseinrichtung mit einer Mehrzahl (d.h. mindestens zwei) von verteilten Sende-/Empfangselementen, wobei die Sende-/Empfangseinrichtung zum Anbringen an das Fahrzeug eingerichtet ist. Die Sende-/Empfangseinrichtung kann beispielsweise ein Teil einer Stoßstange oder Ähnliches sein. Die Mehrzahl umfasst vorzugsweise mindestens 2, mindestens 3, mindestens 4, mindestens 5, mindestens 6, mindestens 10 oder mindestens 12 Sende-/Empfangselemente, wobei jedes Fahrzeug mindestens eines der erfindungsgemäßen Sende-/Empfangseinrichtungen umfasst.

Eine entsprechende Signalerzeugungseinrichtung (entweder ein Schallwandler, vorzugsweise ein Ultraschallwandler, oder eine Hochfrequenzquelle, vorzugsweise eine Radarsignal- oder Mikrowellenquelle) der Vorrichtung umfasst eine Modulatoreinrichtung. Diese ist eingerichtet, im Wesentlichen senkrechte Aufwärts- oder Abwärtsflanken zu erzeugen. Insbesondere kann die Modulatoreinrichtung eingerichtet sein, ein konstantes Ultraschall- oder Hochfrequenzsignal gemäß bestimmter Timingvorgaben ein- oder auszuschalten, wodurch sich eine rechteckförmige Einhüllende ergibt. Die Signalerzeugungseinrichtung, zusammen mit der Modulatoreinrichtung, ist eingerichtet, während derselben Ortsbestimmungsperiode für unterschiedliche Sende-/Empfangselemente Sende-Wellenpulse mit unterschiedlicher Länge vorzusehen, in denen die Modulatoreinrichtungen entsprechende Signale an die einzelnen Elemente abgibt, die sich in ihrer Länge voneinander unterscheiden.

Die Vorrichtung umfasst ferner vorzugsweise einen Vergleicher, der mit der Sende-/Empfangseinrichtung verbunden ist, und eingerichtet ist, Auftrittszeitpunkt und/oder Signalstärken von Komponenten eines Empfangs-Wellenpulses vorzusehen. Diese Auftrittszeitpunkte und/oder Wellenlängen sind derselben Ortsbestimmungsperiode zugeordnet und stammen von verschiedenen Sende-/Empfangselementen. Diese Auftrittszeitpunkte und/oder Signalstärken werden von dem Vergleicher gegenüber vorgegebenen Auftrittszeitpunkten oder vorgegebenen Signalwert-Schwellwerten verglichen, oder werden mit anderen Auftrittszeitpunkten und/oder den Signalstärken der Komponenten derselben Ortsbestimmungsperiode verglichen. Somit sieht der Vergleicher grundsätzlich einen Relativvergleich oder einen Absolutvergleich vor, wobei der Relativvergleich verschiedene Auftrittszeitpunkte verschiedener Komponenten derselben Ortsbestimmungsperiode vergleicht und/oder Signalstärken verschiedener Komponenten derselben Ortsbestimmungsperiode miteinander vergleicht, und wobei der Vergleicher auch für Absolutvergleiche vorgesehen werden kann, wobei Auftrittszeitpunkte einzelner Komponenten verglichen werden mit den zugehörigen Zeitpunkten des Absendens, und/oder wobei Signalstärken eines reflektierten, empfangenen Signals mit den Signalstärken des zugehörigen gesendeten Signals verglichen werden. Der Absolutvergleich kann mit dem Relativvergleich kombiniert werden, beispielsweise durch gemeinschaftliche Interpolation der jeweiligen Ergebnisse. Die Vorrichtung umfasst ferner eine Ortsbestimmungseinrichtung, die mit dem Vergleicher verbunden ist und die eingerichtet ist, aus den Vergleichsergebnissen den Ort (relativ oder absolut) zu ermitteln.

Gemäß einer weiteren Ausführung der Erfindung umfasst der Vergleicher eine Anpassungsvorrichtung, die zur Anpassung der Schwellwerte eingerichtet ist. Der Vergleicher ist ferner eingerichtet, die Schwellwerte, welche an den Vergleicher geleitet werden, gemäß der Signalstärke des aktuellen Empfangs-Wellenpulses oder Komponenten hiervon oder eines Empfangs-Wellenpulses einer vorherigen Ortsbestimmungsperiode oder Komponenten hiervon mit steigender Signalstärke zu heben oder fallender Signalstärke zu senken. Damit wird gewährleistet, dass die einzelnen Schwellwert-Vergleiche den zugehörigen Komponenten korrekt zugeordnet werden.

Neben der Ortsbestimmung kann die Erfindung weitere Datenverarbeitungsvorrichtungen oder -schritte umfassen, in denen anhand der Ortsbestimmungsperiode beispielsweise ein Warnsignal angegeben wird oder in den Betrieb des Fahrzeugs eingegriffen wird, beispielsweise durch Senken der Geschwindigkeit. Hierzu kann die Ortsbestimmungseinrichtung mit entsprechenden Warneinrichtungen oder Elementen der Fahrzeugsteuerung verbunden sein.

### KURZE BESCHREIBUNG DER FIGUREN

Figuren 1a-c zeigen drei unterschiedliche Sende-Wellenpulse, die während derselben Ortsbestimmungsperiode überlappend gesendet werden. Die Figuren 2a-c zeigen drei verschiedene Empfangs-Wellenpulse, die von verschiedenen Sende-/Empfangselementen stammen.

Die Figuren 2a-2c zeigen verschiedene Empfangs-Wellenpulse, die von verschiedenen Sende-/Empfangselementen stammen.

Die Figur 3 zeigt ein Szenario, welches sich auf die Figuren 1a-2c bezieht.

### DETAILLIERTE BESCHREIBUNG DER FIGUREN

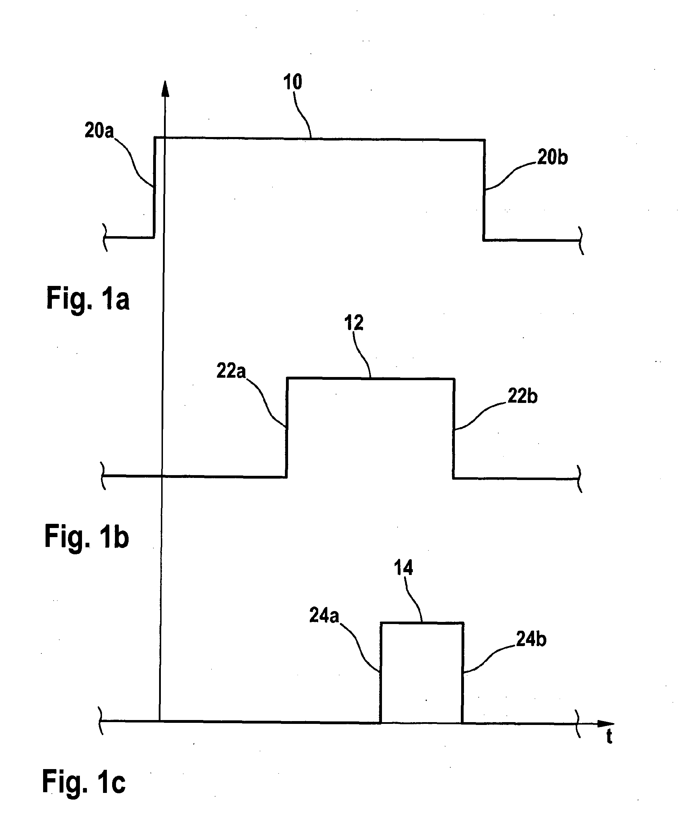

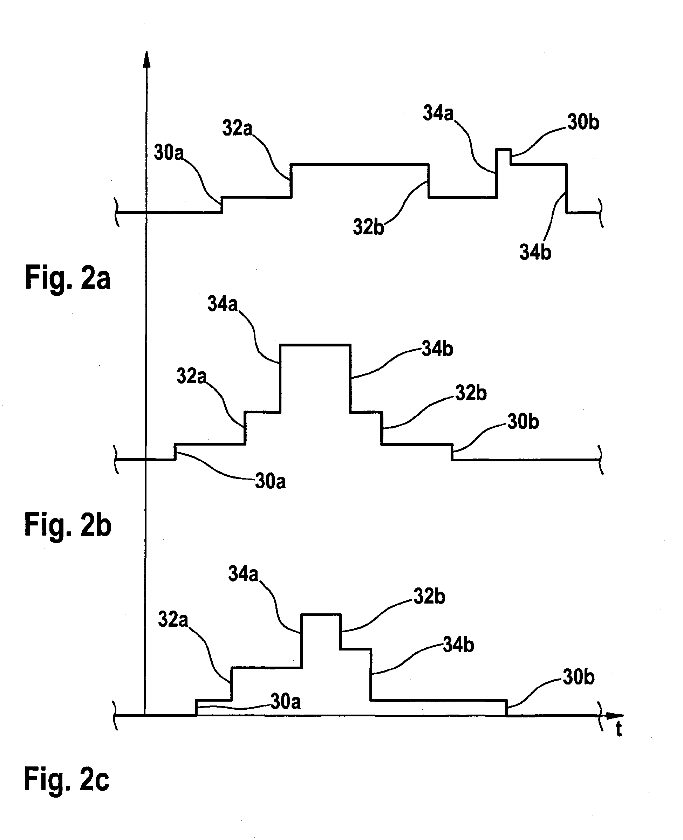

Die Figuren 1a-1c zeigen die unterschiedlichen Sendepulse, die während einer gemeinsamen Ortsbestimmungsperiode von verschiedenen Sende-/Empfangselementen abgegeben werden. Die Sende-Wellenpulse 10, 12, 14 der Figuren 1a-1c werden von an unterschiedlichen Orten der Sende-/Empfangseinrichtung positionierten Sende-/Empfangselemente gesendet. Es ist zu erkennen, dass die Wellenpulse 10, 12, 14 die gleiche Signalstärke haben, sich jedoch in ihrer Pulslänge unterscheiden, sowie im zeitlichen Auftreten der Start- und Endflanke. Die aufsteigenden Flanken 20a, 22a, 24a, die auch als Startflanken bezeichnet werden, sind zueinander versetzt, wobei die Startflanken 20a, 22a, 24a in dieser Reihenfolge zunehmend verzögert sind. Aufgrund der deutlich unterschiedlichen Pulslänge (im Wesentlichen halbieren sich die Pulslängen mit fortlaufender Nummerierung) ergibt sich jedoch eine ungefähre zeitliche Übereinstimmung der Endflanken 20b, 22b, 24b, wobei dies nicht notwendigerweise der Fall ist. Wie sich anhand der Figuren 2a-2c zeigen wird, ist diese Verzögerung der einzelnen Wellenpulse zueinander überlagert von den unterschiedlichen Verzögerungen, die sich durch unterschiedliche Weglängen zwischen Sendeelement und Reflektor ergeben.

Die Figuren 2a-2c zeigen zugehörige, exemplarische Empfangs-Wellenpulse, die sich an den verschiedenen Sende-/Empfangselementen ergeben, von denen in Figur 1a-1c die Sende-Wellenpulse abgesendet wurden. Hierbei entspricht Figur 2a dem Empfangs-Wellenpuls, der von demjenigen Sende-/Empfangselement empfangen wurde, der den Sende-Wellenpuls der Figur 1a abgestrahlt hat, wobei sich ebenso die Figuren 2b und 1b sowie 2c und 1 c in gleicher Weise entsprechen.

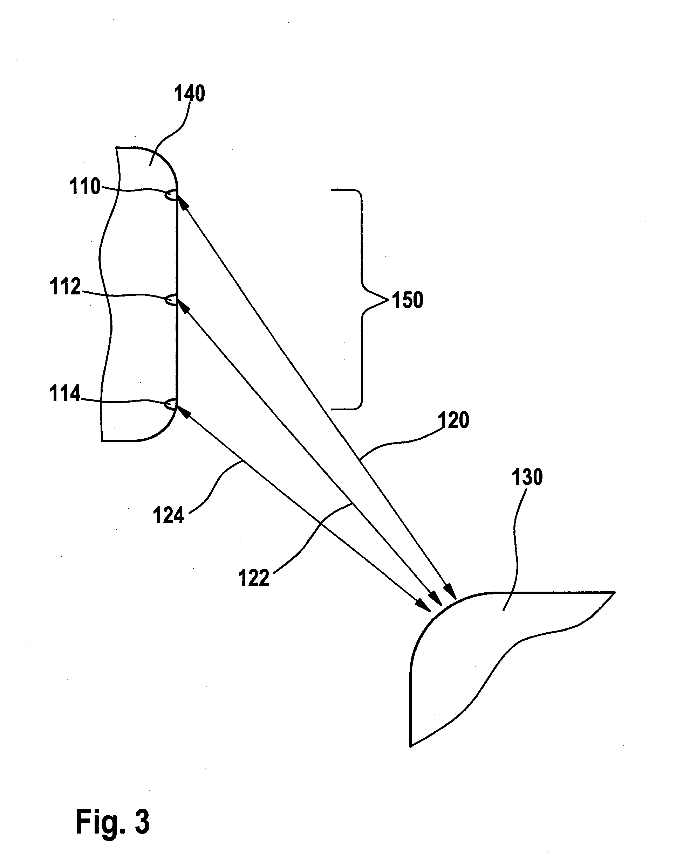

Bei der Betrachtung der Figuren 2a-2c ist das in Figur 3 dargestellte Szenario zu berücksichtigen, das die Anordnung der drei Sende-/Empfangselemente zu einem Objekt darstellt, wobei die dort dargestellten Sende-/Empfangselemente die Sende-/Empfangselemente der Figuren 1a-2c sind.

In den Figuren 2a-2c ist zunächst zu erkennen, dass sich jeweils unterschiedliche Komponenten des Empfangs-Wellenpulses überlagern, die von verschiedenen Sende-Wellenpulsen stammen. Die unterschiedlichen Amplituden der einzelnen Komponenten ergeben sich durch die Dämpfung, welche von der Weglänge abhängt. Von der Dämpfung unverfälscht verbleiben jedoch die Zeitpunkte, an denen die einzelnen Flanken auftreten. Um den Ort zu erfassen, werden zunächst gemäß einer bevorzugten Ausführung die einzelnen Empfangs-Wellenpulse hinsichtlich der einzelnen Komponenten untersucht, um die einzelnen Komponenten der jeweiligen Empfangs-Wellenpulse voneinander zu trennen und in Beziehung zueinander zu setzen. Beim Vergleich der Zeitdauern zwischen den verschiedenen Flanken in den Figuren 2a-2c mit den Zeitdauern der Figuren 1a-1c können die einzelnen Komponenten extrahiert und voneinander getrennt werden. Beispielsweise aus der Signalamplitude kann der Abstand erfasst werden, der mit der zurückgelegten Weglänge des Wellenpulses verknüpft ist. Die Flanken 30a,b sind der Figur 1a zuzuordnen, die Flanken 32a,b sind der Figur 1b zuzuordnen und die Flanken des kürzesten Impulses, 34a,b sind den zugehörigen Pulsen der Figur 1c (24a, 24b) zuzuordnen. Hierbei entsprechen die Bezugszeichen der Figuren 2a-2c den Bezugszeichen in Figuren 1a-1c, wobei die Bezugszeichen der Figuren 2a-2c um 10 größer als die zugehörigen Bezugszeichen der Figuren 1a/1c sind. Dieser Zusammenhang gilt auch für die Figuren 2b, 2c.

Die Darstellungen der Figuren 2a-2c sind weder maßstabsgetreu noch geben diese präzise eine reale Situation wieder. Die Darstellungen der Figuren 2a-2c sind lediglich beispielhafte Darstellungen, mit denen die Überlagerung und die einzelne Extraktion der verschiedenen Komponenten beispielhaft dargestellt wird.

Es ist durch Vergleich der Figuren 2a-c mit den jeweiligen Figuren 1a-c ersichtlich, dass durch einfaches Matching der Einhüllenden auf einfache Weise die Komponenten der Empfangs-Wellenpulse voneinander getrennt werden können, und vor allem hinsichtlich der zeitlichen Anordnung miteinander verglichen werden können, sowohl untereinander innerhalb desselben Empfangs-Wellenpulses als auch unter verschiedenen Empfangs-Wellenpulsen verschiedener Sende-/Empfangselemente derselben Ortsbestimmungsperiode. Die unterschiedliche Verzögerung der verschiedenen Komponenten führt zur Ortsinformation des Objekts relativ zu den Sende-/Empfangselementen. In Figur 2a zeigt sich beispielsweise, dass der Impuls der Figur 1c deutlich mehr verzögert wurde als der Impuls der Figur 1a. In der Figur 2b ist der Versatz zwischen den Flanken 22a und 24a geringer, vgl. Flankenzeitpunkte 32a, 34a der Figuren 2b, 2c, wodurch sich ergibt, dass die Laufzeit für den Impuls der Figur 2c geringer ist als die Laufzeit des Impulses der Figur 1 b. Ferner ergibt sich, dass der in Figur 2c dargestellte empfangene Wellenpuls eine ungefähre gleiche Laufzeit für die Pulse der Figuren 1b und 1c wiedergibt.

Schließlich ist der Figur 2b zu entnehmen, dass die Flanken 30a, 32a ungefähr dem Versatz der Flanken 20a, 22a der Figuren 1a und 1b entsprechen, so dass sich bei der Reflexion im Wesentlichen keine unterschiedlichen Laufzeiten für das Empfangselement der Figur 2b ergaben. In Figur 2c wird jedoch dargestellt, dass die Flanke 32a (vgl. Figur 1b, 22a) gegenüber der Flanke 20a (vgl. Figur 1a) vorgezogen ist und dass die Verzögerung für die Flanke 20a größer ist als die Verzögerung für die Flanke 22a, die in der Figur 2c als Flanken 30a, 32a deutlich näher beieinander liegen.

Neben den Auftrittszeitpunkten der Flanken ist zu erkennen, dass der Sende-Wellenpuls der Figur 1a (mit der größten Pulslänge) am stärksten gedämpft ist, wobei die entsprechende Komponente in der Figur 2b des Sende-Wellenpulses 1b eine geringere Verzögerung erfährt und der kürzeste Wellenpuls der Figur 1c am geringsten gedämpft ist. Dies ist zu erkennen durch den Vergleich der Flanken 30a,b mit den Flanken 32a,b, sowie 34a,b untereinander. Neben der Pulslänge kann somit eine einzelne Komponente erfasst werden, indem Flanken gleicher Höhe zusammen gepaart werden, und dass davon ausgegangen werden kann, dass eine Startflanke zu einer Endflanke gehört, falls diese die gleiche Flankenhöhe aufweisen. Diese Paarung der Flanken bezieht sich auf Flanken des gleichen Wellenpulses.

In der Figur 3 ist eine beispielhafte Situation dargestellt, in der ein Fahrzeug 140 eine Sende-/Empfangseinrichtung 150 umfasst, die drei Sende-/Empfangseinrichtung 110, 112, 114 umfasst. Diese sind in einer Reihe gleichmäßig an einem Rand des Fahrzeugs 140 angeordnet. Die in Figur 3 dargestellte Verkehrssituation umfasst ferner ein Objekt 130, das seitlich versetzt zu der Sende-/Empfangseinrichtung 140 angeordnet ist.

Eine erste primäre Ausbreitungsstrecke ergibt sich zwischen dem Sende-/Empfangselement 110 und dem Reflektor 130 als Wegstrecke 120, eine zweite Wegstrecke 122 ergibt sich zwischen dem Sende-/Empfangselement 112 und dem Reflektor 130, und eine dritte Wegstrecke 124 ergibt sich zwischen dem Sende-/Empfangselement 114 und dem reflektierenden Objekt 130 als Wegstrecke 124. Da das Element 114 an einer Ecke des Fahrzeugs angebracht ist, kann davon ausgegangen werden, dass der erfasste Pfad 124 den Minimalabstand zwischen Objekt 130 und Fahrzeug darstellt. Um den genauen Ort zu ermitteln, kann die zusätzliche Verzögerung erfasst werden, die, im Vergleich zu Strecke 124, die Strecken 120, 122 aufweisen. Die Elemente 110-114 senden Sende-Wellenpulse verschiedener Pulslänge aus, die an dem Objekt 130 reflektiert werden und in überlagerter Form an den einzelnen Elementen 110, 114 wieder empfangen werden. Je nach Länge der Wegstrecke 120-124 bzw. deren Längenverhältnisse zueinander ergeben sich unterschiedliche Verzögerungen für die unterschiedlichen Wellenpulse, welche aufgrund unterschiedlicher Pulslänge voneinander zu trennen sind. In der in Figur 3 vorgesehenen Situation kann das Objekt 130 alleine durch Vergleich der unterschiedlichen Verzögerungen der einzelnen Impulse ermittelt werden, die sich an den einzelnen Elementen 110-114 ergibt. Es ist daher nicht unbedingt notwendig, absolute Laufzeitmessungen durchzuführen, wobei jedoch die so erhaltenen Informationen miteinander kombiniert werden können. Dadurch ergibt sich eine höhere Präzision. Insbesondere durch den relativen Vergleich der Verzögerungen kann unmittelbar der Winkel vorgesehen werden, in dem das Objekt 130 relativ zu der Sende-/Empfangseinrichtung angeordnet ist. Hierzu kann eine Doppelbestimmung (oder Mehrfachbestimmung) des Winkels (oder der Entfernung oder des Orts) zur Triangulation verwendet werden, indem beispielsweise der Empfangs-Wellenpuls des Elements 110 mit dem des Elements 114 verglichen wird, und ein erster Winkel erzeugt wird, wobei in einer weiteren Erfassung beispielsweise der Winkel durch die Elemente 112 und 114 bestimmt wird. Da die Position der einzelnen Elemente 110-114 bekannt ist, muss das Objekt am Schnittpunkt bei der Winkelgeraden liegen, wodurch der Ort des Objekts 130 relativ zum Fahrzeug 140 genau bestimmt werden kann. Wie bereits beschrieben, kann das Verfahren ausgeführt werden alleine durch die Betrachtung des relativen Versatzes zwischen den einzelnen Komponenten, wobei jedoch eine absolute Wegzeitbestimmung alternativ hierzu durchgeführt werden kann oder vorzugsweise mit der relativen Bestimmung des Ortes kombiniert wird, um die Präzision zu erhöhen.

## Patentansprüche

1. Verfahren zur Bestimmung des Orts eines Objekts (130) gegenüber einem Fahrzeug (140), umfassend:
(i) Vorsehen einer Sende-/Empfangseinrichtung (150) mit einer Mehrzahl von verteilt an dem Fahrzeug (140) angeordneten Sende-/Empfangselementen (110'-114');
(ii) Senden von Sende-Wellenpulsen (10-14) einer Trägerwelle mittels der Sende-/Empfangseinrichtung (150) während der selben Ortsbestimmungsperiode; und
(iii) Empfangen mindestens eines Empfangs-Wellenpulses (30-34), der den Sende-Wellenpulsen entspricht, die von dem Objekt reflektiert werden,
**dadurch gekennzeichnet, dass** das Verfahren ferner umfasst:
Erfassen des Orts relativ zu der an dem Fahrzeug angeordneten Sende-/Empfangseinrichtung durch Vergleichen von Flanken (30a-34b) des Empfangs-Wellenpulses, die der selben Ortsbestimmungsperiode zugeordnet sind, und von verschiedenen Sende-Wellenpulsen (10-14) stammen, wobei sich alle Sende-Wellenpulse, die während der selben Ortsbestimmungsperiode gesendet werden, in ihrer Pulslänge voneinander unterscheiden, und pro Ortsbestimmungsperiode jedes Sende-/Empfangselement (110'-114') nur einen Sende-Wellenpuls (10-14) aussendet,
wobei die einzelnen Flanken (30a-34b) jeweils einem einzelnen Sende-Wellenpuls (10-14) zugeordnet werden, wobei der zeitliche Versatz zwischen den verschiedenen Flanken (30a-34b) Richtung und Entfernung des Objekts bezüglich des dem zugeordneten Sende-Wellenpuls (10-14) zugehörigen Sende-/ Empfangselements (110'-114') angibt.

2. Verfahren nach Anspruch 1, wobei die Sende-Wellenpulse (10-14), die von der Sende-/Empfangseinrichtung (150) während der selben Ortsbestimmungsperiode gesendet werden, sich zeitlich teilweise oder vollständig überlappen oder gleichzeitig gesendet werden, oder die derart gesendet werden, dass die Flanken (30a-30b) des Empfangs-Wellenpulses, die den Sende-Wellenpulsen der selben Ortsbestimmungsperiode zugeordnet sind, sich zeitlich teilweise oder vollständig überlappen oder gleichzeitig empfangen werden.

3. Verfahren nach einem der vorangehenden Ansprüche, wobei das Senden von Sende-Wellenpulsen umfasst: Senden von Ultraschallwellen oder Radarwellen als Trägerwelle, wobei die Sende-Wellenpulse eine Einhüllende aufweisen, die mit einer im Wesentlichen senkrechten Startflanke (20a, 22a, 24a), eine im Wesentlichen senkrechte Endflanke (20b, 22b, 24b) oder mit beiden Flanken vorgesehen ist, oder die Einhüllende eine Rechteckform aufweist.

4. Verfahren nach einem der vorangehenden Ansprüche, wobei das Vorsehen umfasst: Vorsehen der Mehrzahl von Sende-/Empfangselementen (110'-114'), die einen Minimalabstand zueinander haben, der einem Vielfachen der Wellenlänge der Trägerwelle entspricht oder der Minimalabstand mindestens 6, 8, 10, 12, 15 oder 20 Wellenlängen der Trägerwelle beträgt.

5. Verfahren nach einem der vorangehenden Ansprüche, wobei das Senden ferner umfasst: wiederholtes Senden von Sende-Wellenpulsen für eine Vielzahl von Ortsbestimmungsperioden, wobei jedes Sende-/Empfangselement (110'-114') Sende-Wellenpulse (10, 12, 14) mit einer Pulslänge ausstrahlt, die für jede Ortsbestimmungsperiode gleich ist, oder die jeweiligen Sende-/Empfangselemente Sende-Wellenpulse mit Pulslängen senden, die für verschiedene Ortsbestimmungsperioden unterschiedlich sind.

6. Verfahren nach einem der vorangehenden Ansprüche, wobei das Erfassen des Orts umfasst: Vergleich eines Empfangs-Wellenpulses oder mehrerer Empfang-Wellenpulse mit einer Mehrzahl von Schwellwerten unterschiedlicher Höhe, wobei die Schwellwerte derart vorgesehen sind, dass sie zwischen Signalstärken von verschiedenen oder überlagerten Komponenten des Empfangs-Wellenpulses der selben Ortsbestimmungsperiode liegen, und die Schwellwerte vordefiniert sind oder an die Signalstärke des Empfangs-Wellenpulses einer vorangehenden oder einer aktuellen Ortsbestimmungsperiode angepasst sind.

7. Vorrichtung zur Bestimmung des Orts eines Objekts gegenüber einem Fahrzeug, umfassend:
eine Sende-/Empfangseinrichtung (150) mit einer Mehrzahl von verteilten Sende-/Empfangselementen (110'-114'), wobei die Sende-/Empfangseinrichtung zum Anbringen an das Fahrzeug eingerichtet ist;
eine Signalerzeugungseinrichtung verbunden mit der Sende/Empfangseinrichtung; **dadurch gekennzeichnet, dass**
die Vorrichtung ferner einen Vergleicher umfasst, der mit der Sende-Empfangseinrichtung (150) verbunden ist und eingerichtet ist,
Auftrittszeitpunkte und/oder Signalstärken von Flanken (30a-34b) mindestens eines Empfangs-Wellenpulses, die der selben Ortsbestimmungsperiode zugeordnet sind und von verschiedenen Sende-Wellenpulsen (10-14) stammen, gegenüber vorgegebenen Auftrittszeitpunkten oder vorgegebenen Signalwert-Scllwellwerten oder gegenüber anderen Auftrittszeitpunkte und/oder den Signalstärken der Komponenten (110'-114') der selben Ortsbestimmungsperiode zu vergleichen, wobei die Vorrichtung eine Ortsbestimmungseinrichtung umfasst, die mit dem Vergleicher verbunden ist, und eingerichtet ist, aus den Vergleichsergebnissen die Richtung und Entfernung des Objekts zu ermitteln, indem die einzelnen Flanken (30a-34b) jeweils einem einzelnen Sende-Wellenpuls (10-14) zugeordnet werden, wobei sich alle Sende-Wellenpulse, die während der selben Ortsbestimmungsperiode gesendet werden, in ihrer Pulslänge voneinander unterscheiden, und pro Ortsbestimmungsperiode jedes Sende-/Empfangselement (110'-114') nur einen Sende-Wellenpuls (10-14) aussendet, und wobei der zeitliche Versatz zwischen den verschiedenen Flanken (30a-34b) Richtung und Entfernung des Objekts bezüglich des dem zugeordneten Sende-Wellenpuls (10-14) zugehörigen Sende-/ Empfangselements (110'-114') angibt.

8. Vorrichtung nach Anspruch 7, wobei der Vergleicher eine Anpassungsvorrichtung umfasst, die zur Anpassung der Schwellwerte eingerichtet ist, und die die Schwellwerte, welche an den Vergleicher geleitet werden, gemäß der Signalstärke des aktuellen Empfangs-Wellenpulses oder eines Empfangs-Wellenpulses einer vorherigen Ortsbestimmungsperiode mit steigender Signalstärke zu heben und mit fallender Signalstärke zu senken.

## Claims

1. Method for determining the location of an object (130) relative to a vehicle (140), comprising:
(i) providing a transceiver (150) having a plurality of transceiving elements (110'-114') arranged distributed on the vehicle (140);
(ii) transmitting transmit wave pulses (10-14) of a carrier wave by means of the transceiver (150) during the same location determination period; and
(iii) receiving at least one receive wave pulse (30-34) which corresponds to the transmit wave pulses which are reflected by the object,
**characterized in that** the method further comprises: detecting the location relative to the transceiver arranged on the vehicle by comparing edges (30a-34b) of the receive wave pulse which are assigned to the same location determination period and originate from various transmit wave pulses (10-14), all the transmit wave pulses which are transmitted during the same location determination period differing from one another in their pulse length and emitting only one transmit wave pulse (10-14) per location determination period of each transceiving element (110'-114'),
the individual edges (30a-34b) respectively being assigned to an individual transmit wave pulse (10-14), the time offset between the various edges (30a-34b) specifying the direction and distance of the object with reference to the transceiving element (110'-114') associated with the assigned transmit wave pulse (10-14).

2. Method according to Claim 1, in which the transmit wave pulses (10-14) which are transmitted by the transceiver (150) during the same location determination period partially or completely overlap one another in time or are transmitted simultaneously, or which are transmitted in such a way that the edges (30a-30b) of the receive wave pulse, which are assigned to the transmit wave pulses of the same location determination period, overlap one another partially or completely in time or are received simultaneously.

3. Method according to one of the preceding claims, in which the transmission of transmit wave pulses comprises: transmitting ultrasonic waves or radar waves as carrier wave, the transmit wave pulses having an envelope which is provided with a substantially vertical start edge (20a, 22a, 24a), a substantially vertical end edge (20b, 22b, 24b) or is provided with two edges, or the envelope has a rectangular shape.

4. Method according to one of the preceding claims, in which the provision comprises: providing the plurality of transceiving elements (110'-114') which have a minimum spacing from one another which corresponds to a multiple of the wavelength of the carrier wave, or the minimum spacing is at least 6, 8, 10, 12, 15 or 20 wavelengths of the carrier wave.

5. Method according to one of the preceding claims, in which the transmission further comprises:
transmitting transmit wave pulses for a multiplicity of location determination periods, each transceiving element (110'-114') emitting transmit wave pulses (10, 12, 14) with a pulse length which is the same for each location determination period, or the respective transceiving elements transmit transmit wave pulses with pulse lengths that are different for various location determination periods.

6. Method according to one of the preceding claims, in which the detection of the location comprises:
comparing a receive wave pulse or a plurality of receive wave pulses with a plurality of threshold values of different height, the threshold values being provided in such a way that they lie between signal strengths of various or superimposed components of the receive wave pulse of the same location determination period, and the threshold values are predefined or are adjusted to the signal strength of the receive wave pulse of a previous or a current location determination period.

7. Device for determining the location of an object relative to a vehicle, comprising:
a transceiver (150) having a plurality of distributed transceiving elements (110'-114'), the transceiver being set up for mounting on the vehicle;
a signal generator connected to the transceiver; **characterized in that**
the device further comprises a comparator which is connected to the transceiver (150) and is set up to compare occurrence times and/or signal strengths of edges (30a-34b) of at least one receive wave pulse which are assigned to the same location determination period and originate from various transmit wave pulses (10-14), with prescribed occurrence times or prescribed signal value threshold values, or with other occurrence times and/or the signal strengths of the components (110'-114') of the same location determination period, the device comprising a location determination device which is connected to the comparator and is set up to determine the direction and distance of the object from the comparison results by the individual edges (30a-34b) respectively being assigned to an individual transmit wave pulse (10-14), all the transmit wave pulses which are transmitted during the same location determination period differing from one another in their pulse length and emitting only one transmit wave pulse (10-14) per location determination period of each transceiving element (110'-114'), and the time offset between the various edges (30a-34b) specifying the direction and distance of the object with reference to the transceiving element (110'-114') associated with the assigned transmit wave pulse (10-14).

8. Device according to Claim 7, in which the comparator comprises an adjustment device which is set up to adjust the threshold values, and to raise the threshold values, which are led to the comparator, in accordance with the signal strength of the current receive wave pulse or a receive wave pulse of a previous location determination period when signal strength is rising, and to lower them when signal strength is falling.

## Revendications

1. Procédé de détermination de l'emplacement d'un objet (130) par rapport à un véhicule (140), comprenant :
(i) fourniture d'un dispositif émetteur/récepteur (150) muni d'une pluralité d'éléments émetteurs/récepteurs (110'-114') disposés de manière répartie sur le véhicule (140) ;
(ii) émission d'impulsions d'onde émise (10-14) d'une onde porteuse au moyen du dispositif émetteur/récepteur (150) pendant la même période de détermination de l'emplacement ; et
(iii) réception d'au moins une impulsion d'onde reçue (30-34) qui correspond aux impulsions d'onde émise qui ont été réfléchies par l'objet ;
**caractérisé en ce que** le procédé comprend en outre :
détection de l'emplacement par rapport au dispositif émetteur/récepteur disposé sur le véhicule en comparant les fronts (30a-34b) de l'impulsion d'onde reçue qui sont associés à la même période de détermination de l'emplacement et qui proviennent de différentes impulsions d'onde émise (10-14), toutes les impulsions d'onde émise qui sont émises pendant la même période de détermination de l'emplacement se différenciant les unes des autres par leur longueur d'impulsion et chaque élément émetteur/récepteur (110'-114') n'émettant qu'une seule impulsion d'onde émise (10-14) pendant chaque période de détermination de l'emplacement,
les fronts (30a-34b) individuels étant respectivement associés à une impulsion d'onde émise (10-14) unique, le décalage dans le temps entre les différents fronts (30a-34b) indiquant la direction et l'éloignement de l'objet par rapport à l'élément émetteur/récepteur (110'-114') appartenant à l'impulsion d'onde émise (10-14) associée.

2. Procédé selon la revendication 1, selon lequel les impulsions d'onde émise (10-14) qui sont émises par le dispositif émetteur/récepteur (150) pendant la même période de détermination de l'emplacement se chevauchent partiellement ou totalement dans le temps ou sont émises simultanément, ou alors elles sont émises de telle sorte que les fronts (30a-30b) de l'impulsion d'onde reçue qui sont associés aux impulsions d'onde émise de la même période de détermination de l'emplacement se chevauchent partiellement ou totalement dans le temps ou sont reçus simultanément.

3. Procédé selon l'une des revendications précédentes, selon lequel l'émission d'impulsions d'onde émise comprend : émission d'ondes ultrasoniques ou d'ondes radar en tant qu'onde porteuse, les impulsions d'onde émise présentant une enveloppante qui est prévue avec un front de départ (20a, 22a, 24a) sensiblement vertical, un front final (20b, 22b, 24b) sensiblement vertical ou avec les deux fronts, ou l'enveloppante présentant une forme rectangulaire.

4. Procédé selon l'une des revendications précédentes, selon lequel la fourniture comprend :
fourniture de la pluralité d'éléments émetteurs/récepteurs (110'-114') qui présentent un écart minimal entre eux, lequel correspond à un multiple de la longueur d'onde de l'onde porteuse, ou alors l'écart minimal est au moins égal à 6, 8, 10, 12, 15 ou 20 longueurs d'onde de l'onde porteuse.

5. Procédé selon l'une des revendications précédentes, selon lequel l'émission comprend en outre : émission répétée d'impulsions d'onde émise pendant une pluralité de périodes de détermination de l'emplacement, chaque élément émetteur/récepteur (110'-114') rayonnant des impulsions d'onde émise (10, 12, 14) ayant une longueur d'impulsion qui est identique pendant chaque période de détermination de l'emplacement, ou alors les éléments émetteurs/récepteurs respectifs émettant des impulsions d'onde émise ayant des longueurs d'impulsion qui sont différentes pendant diverses périodes de détermination de l'emplacement.

6. Procédé selon l'une des revendications précédentes, selon lequel la détection de l'emplacement comprend : comparaison d'une impulsion d'onde émise ou de plusieurs impulsions d'onde émise avec une pluralité de valeurs de seuil de différentes hauteurs, les valeurs de seuil étant prévues de telle sorte qu'elles se situent entre des intensités de signal de composantes différentes ou superposées de l'impulsion d'onde reçue de la même période de détermination de l'emplacement, et les valeurs de seuil étant prédéfinies ou étant adaptées à l'intensité de signal de l'impulsion d'onde reçue d'une période de détermination de l'emplacement précédente ou actuelle.

7. Dispositif de détermination de l'emplacement d'un objet par rapport à un véhicule, comprenant :
un dispositif émetteur/récepteur (150) muni d'une pluralité d'éléments émetteurs/récepteurs (110'-114') répartis, le dispositif émetteur/récepteur étant conçu pour être monté sur le véhicule ;
un dispositif de génération de signal relié avec le dispositif émetteur/récepteur ; **caractérisé en ce que** le dispositif comprend en outre un comparateur qui est relié avec le dispositif émetteur/récepteur (150) et qui est conçu pour comparer les instants de survenance et/ou les intensités de signal de fronts (30a-34b) d'au moins une impulsion d'onde reçue qui sont associés à la même période de détermination de l'emplacement et qui proviennent de différentes impulsions d'onde émise (10-14) avec des instants de survenance ou des valeurs de seuil de signal prédéfinies ou encore avec d'autres instants de survenance et/ou les intensités de signal des composantes (110'-114') de la même période de détermination de l'emplacement, le dispositif comprenant un dispositif de détermination de l'emplacement qui est relié avec le comparateur et qui est conçu pour déterminer la direction et l'éloignement de l'objet à partir des résultats de la comparaison, **en ce que** les fronts (30a-34b) individuels sont respectivement associés à une impulsion d'onde émise (10-14) unique, toutes les impulsions d'onde émise qui sont émises pendant la même période de détermination de l'emplacement se différenciant les unes des autres par leur longueur d'impulsion, et pour chaque période de détermination de l'emplacement, chaque élément émetteur/récepteur (110'-114') n'émettant qu'une seule impulsion d'onde émise (10-14), et le décalage dans le temps entre les différents fronts (30a-34b) indiquant la direction et l'éloignement de l'objet par rapport à l'élément émetteur/récepteur (110'-114') appartenant à l'impulsion d'onde émise (10-14) associée.

8. Dispositif selon la revendication 7, dans lequel le comparateur comprend un dispositif d'adaptation qui est conçu pour l'adaptation des valeurs de seuil et qui relève les valeurs de seuil, qui sont acheminées au comparateur, en fonction de l'intensité de signal de l'impulsion d'onde reçue actuelle ou d'une impulsion d'onde reçue d'une période de détermination de l'emplacement précédente lorsque l'intensité de signal augmente et les abaisse lorsque l'intensité de signal diminue.
